# EUROPEAN PATENT APPLICATION

(11) **EP 4 782 958 A1**
(43) Date of publication of application: **29.07.2026**
(21) Application number: 26152843.4
(22) Date of filing: 20.01.2026
(51) Int. Cl.: G06F 1/16, H04M 1/02

(54) **DISPLAY DEVICE AND ELECTRONIC DEVICE INCLUDING THE SAME**

(30) Priority: 23.01.2025 KR 20250010270
(71) Applicant: Samsung Display Co., Ltd., Yongin-si, Gyeonggi-do 17113 (KR)
(72) Inventor: Seo, Tae An, Yongin-si, Gyeonggi-do (KR)
(74) Representative: Gulde & Partner

(57) **Abstract**

A display device (100) includes a display module (110). A module support member (120) is arranged on the display module (110). A plurality of multi-bars (130) is arranged on the module support member (120). A reinforcing member (150) is arranged between the module support member (120) and the plurality of multi-bars (130) in a thickness direction (D3) of the display module (110).

## Description

### 1. Technical Field

The present disclosure relates to a display device and an electronic device including the same.

### 2. Discussion of Related Art

Various types of electronic devices, such as smartphones, tablet PCs, digital cameras, laptop computers, navigation systems and smart TVs, include display devices for displaying images to a user.

The importance of display devices is increasing with the development of the information society. In this respect, various types of display devices such as an organic light emitting display (OLED) device and a liquid crystal display (LCD) device are being used.

Recently, research and development of a display device having a flexible display has been conducted along with the advancement of display technologies. The flexible display may extend or reduce a display screen in such a way of folding, bending or sliding the display screen, thereby increasing the volume reduction or design change of the display device for increased user convenience and portability.

### BRIEF SUMMARY

An object of the present disclosure is to provide a display device that may prevent a portion from being protruded outwardly while the display device is sliding, and an electronic device including the same.

The objects of the present disclosure are not limited to those mentioned above and additional objects of the present disclosure, which are not mentioned herein, will be clearly understood by those skilled in the art from the following description of embodiments of the present disclosure.

The invention is defined by the appended set of claims. The description that follows is subjected to this limitation. Any disclosure lying outside the scope of said claims is only intended for illustrative as well as comparative purposes.

According to an embodiment of the present disclosure, a display device includes a display module. A module support member is arranged on the display module. A plurality of multi-bars is arranged on the module support member. A reinforcing member is arranged between the module support member and the plurality of multi-bars in a thickness direction of the display module.

In an embodiment, the display device includes a driving shaft connected to the plurality of multi-bars, and a driving module connected to the driving shaft.

In an embodiment, the display module includes a fixed display area and an expanded display area, and the module support member is arranged on the expanded display area.

In an embodiment, the expanded display area extends in a first direction from the fixed display area, the plurality of multi-bars is arranged to be spaced apart from each other in the first direction, and the driving shaft extends from an outside of the display module to the expanded display area, and is connected to an outermost multi-bar among the plurality of multi-bars.

In an embodiment, the reinforcing member extends along the first direction from a center portion of the expanded display area in an opposite second direction crossing the first direction. In an embodiment, the reinforcing member along the first direction on a center portion of the expanded display area, wherein the center portion is defined in a second direction perpendicular to the first direction.

In an embodiment, an end portion of a first side of the reinforcing member is fixed to the driving shaft, and an end portion of an opposite second side of the reinforcing member is fixed to the module support member near a boundary line between the fixed display area and the expanded display area. Herein the term "near" is defined as "at or adjacent to".

In an embodiment, the plurality of multi-bars extend in the second direction crossing the first direction, each of the plurality of multi-bars and the module support member are bonded to each other at a plurality of bonding points, and the plurality of bonding points are arranged to be spaced apart from each other in the second direction along each of the plurality of multi-bars.

In an embodiment, the reinforcing member is arranged between the plurality of bonding points in a plan view. In an embodiment, the plurality of multi-bars extend in a second direction perpendicular to the first direction; each of the plurality of multi-bars and the module support member are bonded to each other at a plurality of bonding points; and the plurality of bonding points are arranged to be spaced apart from each other in the second direction along each of the plurality of multi-bars, and the reinforcing member is arranged between the plurality of bonding points in a plan view.

In an embodiment, the module support member includes an insertion groove receiving the reinforcing member, and at least a portion of the reinforcing member is disposed in the insertion groove of the module support member.

In an embodiment, the insertion groove has a cross-sectional area in a thickness direction of the module support member that gradually decreases towards the display module, and the reinforcing member ha a shape corresponding to the insertion groove.

In an embodiment, the reinforcing member includes a plurality of reinforcing members, and the plurality of reinforcing members is arranged to be spaced apart from each other in an opposite second direction crossing the first direction. In an embodiment, the reinforcing member includes a plurality of reinforcing members; and the plurality of reinforcing members is arranged to be spaced apart from each other in a second direction perpendicular to the first direction.

In an embodiment, an end portion of a first side of a first reinforcing member of the plurality of reinforcing members is fixed to the driving shaft, an end portion of a second side of the first reinforcing member of the plurality of reinforcing members is fixed to the module support member, and end portions of respective first and second sides of other reinforcing members not including the first reinforcing member are fixed to the module support member.

In an embodiment, the driving shaft extends in the first direction towards a center portion of the expanded display area in the second direction, and the end portion of the second side of the first reinforcing member is fixed to the module support member near a boundary line between the fixed display area and the expanded display area.

In an embodiment, the first reinforcing member is arranged on a same virtual line as the driving shaft. In an embodiment, the driving shaft extends in the first direction on a center portion of the expanded display area, wherein the center portion is defined in the second direction; the end portion of the second side of the first reinforcing member is fixed to the module support member at or adjacent to a boundary line between the fixed display area and the expanded display area, and the first reinforcing member is arranged on a same virtual line as the driving shaft.

In an embodiment, the end portions of the first side of the other reinforcing members not including the first reinforcing member is fixed to the module support member near an edge of the expanded display area, and the end portions of the second side of the other reinforcing members not including the first reinforcing member are fixed to the module support member near a boundary line between the fixed display area and the expanded display area. In an embodiment, the end portions of the first side of the other reinforcing members not including the first reinforcing member are fixed to the module support member at or adjacent to an edge of the expanded display area; and the end portions of the second sides of the other reinforcing members not including the first reinforcing member are fixed to the module support member at or adjacent to a boundary line between the fixed display area and the expanded display area.

In an embodiment, the module support member includes a plurality of insertion grooves receiving the plurality of reinforcing members, and at least a portion of the plurality of reinforcing members is disposed into the plurality of insertion grooves of the module support member.

In an embodiment, the plurality of insertion grooves has a cross-sectional area in a thickness direction of the module support member that gradually decreases towards the display module, and the plurality of reinforcing members has a shape corresponding to the plurality of insertion grooves, respectively.

According to an embodiment of the present disclosure, an electronic device includes a display device as disclosed above; and a case supporting the display module.

According to an embodiment of the present disclosure, an electronic device includes a display module, a module support member arranged on the display module, a plurality of multi-bars arranged on the module support member, a reinforcing member arranged between the module support member and the plurality of multi-bars in a thickness direction of the display module, a driving shaft connected to the plurality of multi-bars, a driving module connected to the driving shaft, and a case supporting the display module.

In an embodiment, the display module includes a fixed display area and an expanded display area, the module support member is arranged on the expanded display area, the expanded display area extends in a first direction from the fixed display area, the plurality of multi-bars are arranged to be spaced apart from each other in the first direction, and the driving shaft extends from an outside of the display module to the expanded display area, and is connected to an outermost multi-bar among the plurality of multi-bars.

In an embodiment, an end portion of a first side of the reinforcing member is fixed to the driving shaft, and an end portion of an opposite second side of the reinforcing member is fixed to the module support member near a boundary line between the fixed display area and the expanded display area.

In the display device and the electronic device including the same according to the present disclosure, a reinforcing member that reinforces a display module between a module support member of the display device and a plurality of multi-bars is arranged, so that a portion of the display device may be prevented from being protruded outward while the display device is sliding.

The effects according to the embodiments of the present disclosure are not limited to those mentioned above and more various effects are included in the following description of the present disclosure.

### BRIEF DESCRIPTION OF THE DRAWINGS

The above and other aspects and features of the present disclosure will become more apparent by describing in detail non-limiting embodiments thereof with reference to the attached drawings, in which:
FIG. 1 is a block diagram illustrating an electronic device according to an embodiment of the present disclosure;
FIG. 2 is a schematic diagram of an electronic device according to an embodiment of the present disclosure;
FIG. 3 is a schematic diagram illustrating an example in which a sliding display device is applied to a laptop of FIG. 2 according to an embodiment of the present disclosure;
FIG. 4 is a plan view illustrating an electronic device according to an embodiment of the present disclosure;
FIG. 5 is a plan view illustrating a state that a display module is slid in FIG. 4 according to an embodiment of the present disclosure;
FIG. 6 is a cross-sectional view taken along line A-A' of FIG. 4 according to an embodiment of the present disclosure;
FIG. 7 is a cross-sectional view taken along line B-B' of FIG. 6 according to an embodiment of the present disclosure;
FIG. 8 is a cross-sectional view illustrating a state that a display module is slid in a state of FIG. 6 according to an embodiment of the present disclosure;
FIG. 9 is a schematic cross-sectional view illustrating a display module of FIG. 4 according to an embodiment of the present disclosure;
FIG. 10 is a schematic cross-sectional view illustrating a display panel of FIG. 9 according to an embodiment of the present disclosure;
FIG. 11 is a plan view illustrating an unfolded state of a display device according to an embodiment of the present disclosure;
FIG. 12 is a plan view illustrating a state that a plurality of multi-bars are removed from FIG. 11 according to an embodiment of the present disclosure;
FIG. 13 is a side view of FIG. 11 viewed in a second direction according to an embodiment of the present disclosure;
FIGS. 14 and 15 are side views illustrating another example of FIG. 13 according to embodiments of the present disclosure;
FIG. 16 is a plan view illustrating a state that a plurality of reinforcing members are arranged in FIG. 11 according to an embodiment of the present disclosure;
FIG. 17 is a plan view illustrating a state that a plurality of multi-bars are removed from FIG. 16 according to an embodiment of the present disclosure;
FIG. 18 is a side view of FIG. 16 viewed in a second direction according to an embodiment of the present disclosure; and
FIGS. 19 and 20 are side views illustrating another example of FIG. 18 according to embodiments of the present disclosure.

### DETAILED DESCRIPTION OF EMBODIMENTS

Advantages and features of the present disclosure and methods to achieve them will become apparent from the descriptions of non-limiting embodiments hereinbelow with reference to the accompanying drawings. However, embodiments of the present disclosure are not limited to the described embodiments but may be implemented in various different ways.

As used herein, a phrase "an element A on an element B" refers to that the element A may be disposed directly on the element B and/or the element A may be disposed indirectly on the element B via another element C. The phrase "an element A directly on an element B" refers to that no intervening elements may be between elements A and B. Like reference numerals denote like elements throughout the descriptions. The figures, dimensions, ratios, angles, numbers of elements given in the drawings are merely illustrative and are not limiting.

Although terms such as first, second, etc. are used to distinguish arbitrarily between the elements such terms describe, and thus these terms are not necessarily intended to indicate temporal or other prioritization of such elements. These terms are used to merely distinguish one element from another. Accordingly, as used herein, a first element may be a second element within the technical scope of the present disclosure.

Features of various example embodiments of the present disclosure may be combined partially or totally. As will be clearly appreciated by those skilled in the art, technically various interactions and operations are possible. Various example embodiments can be practiced individually or in combination.

Hereinafter, non-limiting embodiments of the present disclosure will be described in detail with reference to the accompanying drawings.

The display device according to an embodiment may be applied to various electronic devices. An electronic device according to an embodiment includes the above-described display device, and may further include a module or device having other additional functions in addition to the display device.

A display device includes a display module, a module support member disposed on the display module, a plurality of multi-bars disposed on the module support member and a reinforcing member arranged between the module support member and the plurality of multi-bars in a thickness direction of the display module.

The reinforcing member may be arranged on a same virtual line as the driving shaft to support the display module. The reinforcing member prevents a portion of the display module from protruding outwardly in a sliding process for expanding or reducing the display area of the display module. Thus, the display device may have increased portability and user convenience and the sliding operation may be efficiently performed without decreasing the display quality of the display device.

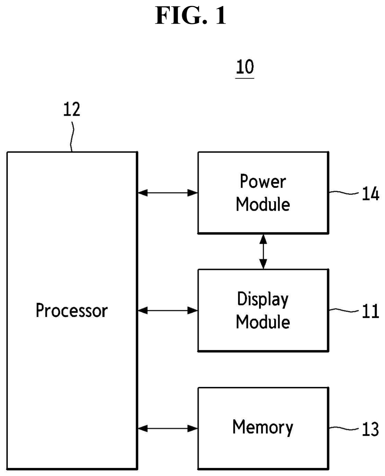

FIG. 1 is a block diagram illustrating an electronic device according to an embodiment.

Referring to FIG. 1, an electronic device 10 according to an embodiment may include a display module 11, a processor 12, a memory 13, and a power module 14.

In an embodiment, the processor 12 may include at least one of a central processing unit (CPU), an application processor (AP), a graphic processing unit (GPU), a communication processor (CP), an image signal processor (ISP), or a controller.

Data information necessary for an operation of the processor 12 or the display module 11 may be stored in the memory 13. When the processor 12 executes an application stored in the memory 13, an image data signal and/or an input control signal is transferred to the display module 11, and the display module 11 may process the received signal and output image information through a display screen.

In an embodiment, the power module 14 may include a power supply module such as a power adapter or a battery device, and a power conversion module that converts power supplied by the power supply module to generate power necessary for the operation of the electronic device 10.

At least one of the respective components of the above-described electronic device 10 may be included in the display device according to the above-described embodiments. In addition, some of the individual modules functionally included in one module may be included in the display device, and other some of them may be provided separately from the display device. For example, the display device may include the display module 11, and the processor 12, the memory 13 and the power module 14 may be provided as other types of devices in the electronic device 10 not the display device.

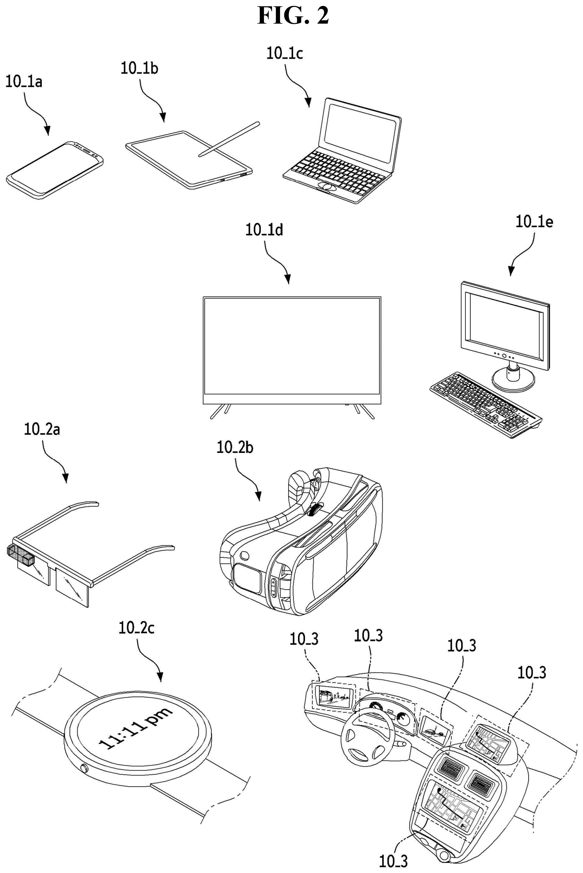

FIG. 2 is a schematic diagram of an electronic device according to various embodiments.

Referring to FIG. 2, various electronic devices to which the display device according to embodiments is applied may include not only electronic devices for displaying images, such as a smartphone 10_1a, a tablet PC 10_1b, a laptop 10_1c, a TV 10_1d, and a desk monitor 10_1e, but also a wearable electronic device including a display module such as a smart glasses 10_2a, a head mounted display 10_2b and a smart watch 10_2c, and a vehicle electronic device 10_3 including a display module such as a vehicle dashboard, a center fascia, a center information display (CID) arranged on the dashboard, and a room mirror display. However, embodiments of the present disclosure are not necessarily limited thereto and the electronic device 10 may be various different small-sized, medium-sized and large-sized electronic devices.

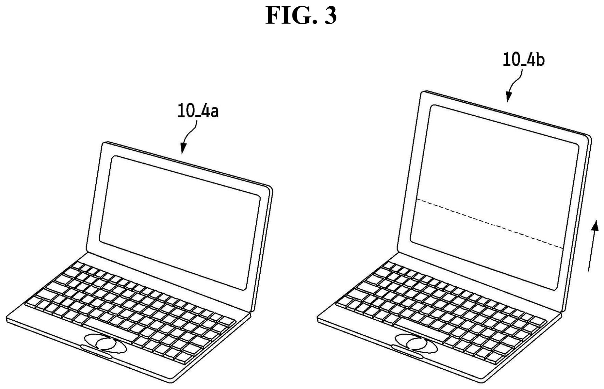

FIG. 3 is a schematic diagram illustrating an example in which a sliding display device is applied to a laptop of FIG. 2.

Referring to FIG. 3, in an embodiment a display module of laptops 10_4a and 10_4b to which a slidable display device is applied may be expanded in one direction. For example, the laptop 10_4a before the display module is expanded may be in a state before the display module is slid, and the laptop 10_4b in which the display module is expanded may be in a state that the display module is expanded in one direction. The laptop 10_4b in which the display module is expanded may provide an expanded display area to a user as compared to the laptop 10_4a before the display module is expanded.

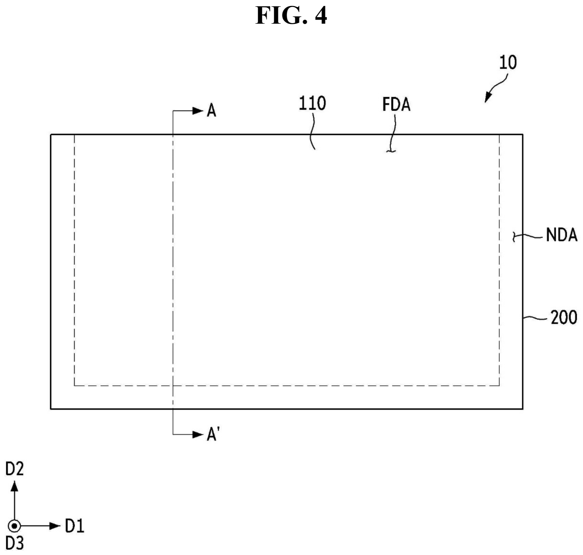

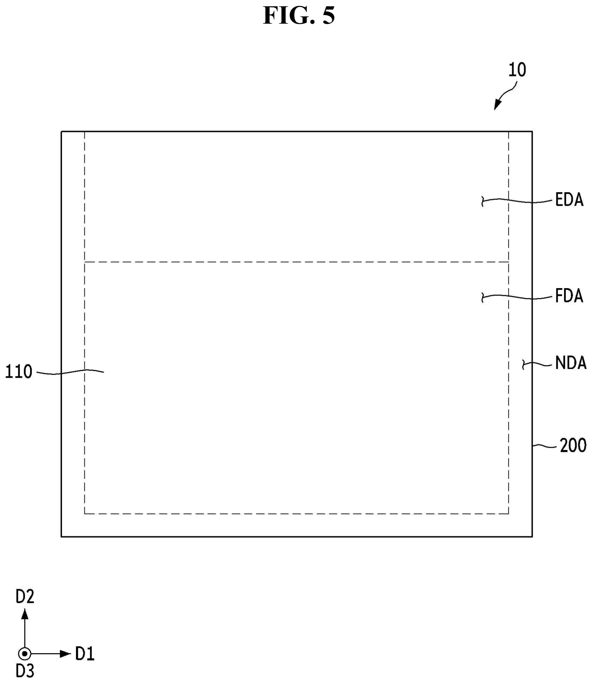

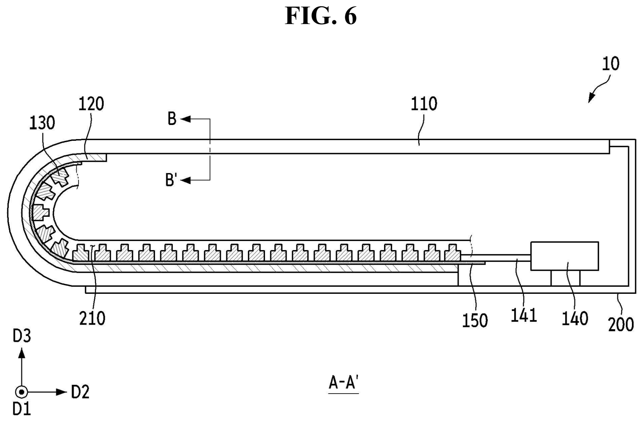

FIG. 4 is a plan view illustrating an electronic device according to an embodiment of the present disclosure. FIG. 5 is a plan view illustrating a state that a display module is slid in FIG. 4. FIG. 6 is a cross-sectional view taken along line A-A' of FIG. 4.

Referring to FIGS. 4 to 6, the electronic device 10 according to an embodiment of the present disclosure may be a sliding electronic device 10 or a slidable electronic device 10, which is slidable. The electronic device 10 according to an embodiment may be a single slidable electronic device 10 that slides only in one direction, but embodiments of the present disclosure are not necessarily limited thereto. For example, the electronic device 10 according to an embodiment may be a multi-slidable electronic device that slides in both directions. Hereinafter, the single slidable electronic device 10 will be mainly described for economy of explanation.

The electronic device 10 according to an embodiment of the present disclosure may include a display device 100 and a case 200.

In an embodiment, the display device 100 may include a display module 110, a module support member 120, a plurality of multi-bars 130, a driving module 140, and a reinforcing member 150.

In an embodiment, the display module 110 is a module that displays at least one still and/or moving image, and any type of display module, such as an organic light emitting display module including an organic light emitting layer, a micro light emitting diode display module using a micro LED, a quantum dot light emitting display module using a quantum dot light emitting diode including a quantum dot light emitting layer, and an inorganic light emitting display module using an inorganic light emitting element including an inorganic semiconductor, may be applied as the display module of the present embodiment.

The display module 110 may be a flexible module. For example, in an embodiment the display module 110 may have flexibility to be partially rolled, bent or curved along a guide rail 210 formed in the case 200. The display module 110 may be slid along a second direction D2.

The display module 110 may include a display area and a non-display area NDA. A planar shape of the display area may follow a shape of the electronic device 10. For example, when the planar shape of the electronic device 10 is rectangular, the planar shape of the display area may be also rectangular.

The display area may include a plurality of pixels of the display module 110, thereby displaying an image. The non-display area NDA may not include a plurality of pixels of the display module 110, thereby not displaying an image. The non-display area NDA may be arranged around the display area (e.g., in a plan view). In an embodiment, the non-display area NDA may be arranged to surround the display area (e.g., fully surround in a plan view), but embodiments of the present disclosure are not necessarily limited thereto. In some embodiments, the display area may be partially surrounded by the non-display area NDA (e.g., in a plan view).

In an embodiment, the display area may include (e.g., be partitioned into) a fixed display area FDA and an expanded display area EDA. As shown in FIG. 4, the fixed display area FDA may be a display area exposed to the outside (e.g., the external environment) when the display module 110 is not slid. The expanded display area EDA may be an expanded display area extended from the fixed display area FDA and exposed to the outside (e.g., the external environment) when the display module 110 is in a sliding state, as shown in FIG. 5. In an embodiment, the expanded display area EDA may be extended from the fixed display area FDA in the second direction D2. However, embodiments of the present disclosure are not necessarily limited thereto and the expanded display area EDA may be variously arranged.

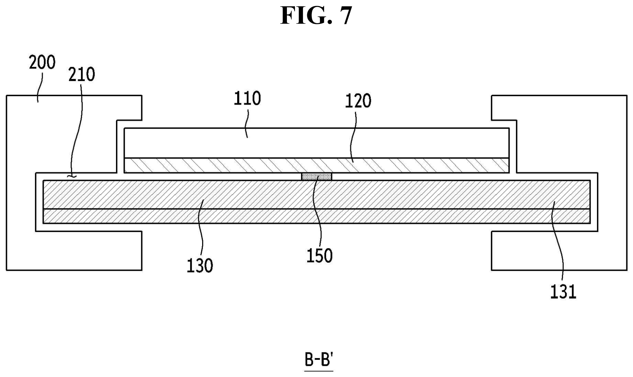

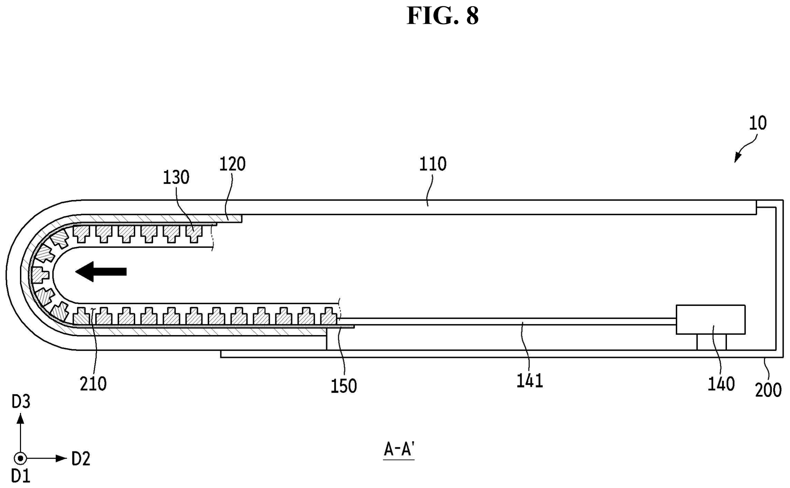

FIG. 7 is a cross-sectional view taken along line B-B' of FIG. 6. FIG. 8 is a cross-sectional view illustrating a state that a display module is slid in a state of FIG. 6.

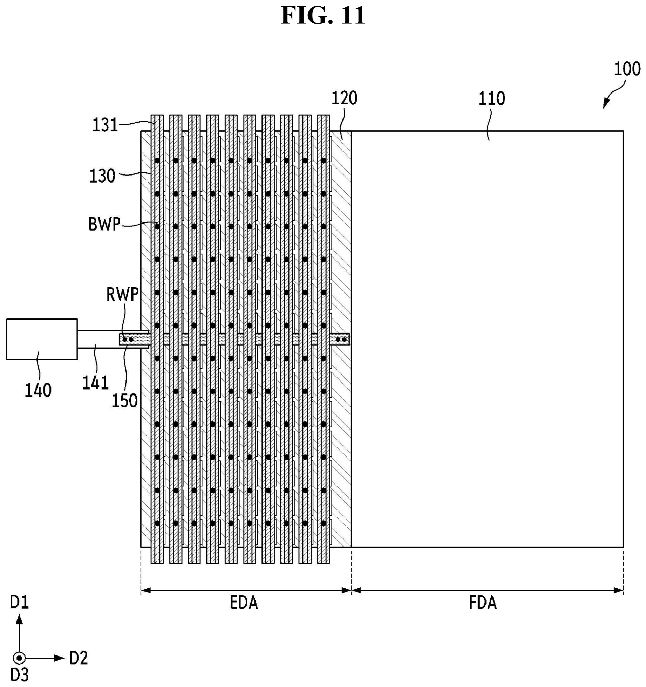

Referring to FIGS. 7 and 8, the case 200 may support a display device 100 (see FIG. 11), and may cover other portions of the display device 100 except for the display area. A guide rail 210 for inserting insertion portions 131 formed on respective sides of the plurality of multi-bars 130 may be formed in the case 200. In an embodiment, the guide rail 210 may guide a moving track, in which the plurality of multi-bars 130 are moved, while the display module 110 is being slid. When the display module 110 is slid, the driving module 140 is operated so that a driving shaft 141 moves in a left direction of FIG. 8 (e.g., a direction opposite to the second direction D2), and as the driving shaft 141 moves, the plurality of multi-bars 130 may move along the guide rail 210, so that the display module 110 may be slid.

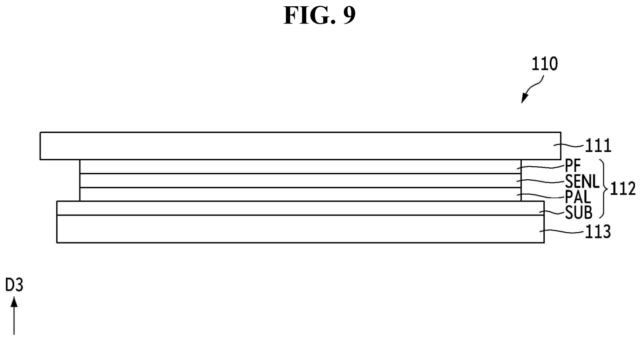

FIG. 9 is a schematic cross-sectional view illustrating a display module of FIG. 4.

Referring to FIG. 9, in an embodiment the display module 110 may include a cover window 111, a display panel 112, and a panel lower member 113.

The cover window 111 my include a material having high light transmittance. In an embodiment, the cover window 111 may include a polymer resin such as polyimide or glass. In an embodiment, the cover window 111 may be attached onto a polarizing film PF, which will be described later, of the display panel 112 by an adhesive member such as an optically clear adhesive (OCA) film.

The display panel 112 may be arranged below the cover window 111 (e.g., in a direction opposite to the third direction D3). In an embodiment, the display panel 112 may have a rectangular plane shape having a pair of long sides and a pair of short sides (e.g., in a plan view). A corner at which a long side and a short side meet in the display panel 112 may be formed at a right angle, or may be rounded to have a curvature. However, embodiments of the present disclosure are not necessarily limited thereto and the display panel 112 may have another polygonal shape in addition to the rectangular shape, a circular shape, an oval shape or an irregular plane shape (e.g., in a plan view).

In an embodiment, the display panel 112 may include a substrate SUB, a display unit PAL, a sensor unit SENL and a polarizing film PF.

In an embodiment, the substrate SUB may be made of an insulating material such as glass, quartz and a polymer resin. The substrate SUB may be a rigid substrate, or may be a flexible substrate capable of being subjected to bending, folding, rolling, etc.

The display unit PAL may be arranged on the substrate SUB (e.g., disposed directly thereon in the third direction D3). The display unit PAL may be a layer that includes a plurality of light emission areas for emitting light. In an embodiment, the display unit PAL may include a buffer film, a thin film transistor layer in which thin film transistors are arranged, a light emitting element layer for emitting light, and an encapsulation layer for encapsulating the light emitting element layer.

The sensor unit SENL may be arranged on the display unit PAL (e.g., disposed directly thereon in the third direction D3). The sensor unit SENL includes sensor electrodes, and may be a layer for sensing whether there is a user's touch, the touch of an object, a hover, etc.

The polarizing film PF may be arranged on the sensor unit SENL (e.g., disposed directly thereon in the third direction D3). The polarizing film PF may serve to prevent deterioration in image visibility of the display panel 112 due to reflection of external light. The polarizing film PF may include a linearly polarizing plate and a phase delay film such as a λ/4 (quarter-wave) plate. The phase delay film may be arranged on the sensor unit SENL, and the linearly polarizing plate may be arranged on the phase delay film. The cover window 111 may be arranged on the polarizing film PF (e.g., disposed directly thereon in the third direction D3).

The panel lower member 113 may be arranged below the substrate SUB (e.g., in a direction opposite to the third direction D3). In an embodiment, the panel lower member 113 may be attached to a lower surface of the substrate SUB through an adhesive layer. In an embodiment, the adhesive layer may be a pressure sensitive adhesive (PSA). In an embodiment, the panel lower member 113 may include at least one of a light absorbing member for absorbing light incident from the outside (e.g., the external environment), a buffer member for absorbing an impact from the outside (e.g., the external environment), or a heat dissipation member for efficiently discharging heat of the display panel 112.

The light absorbing member may be arranged below the substrate SUB (e.g., in a direction opposite to the third direction D3). The light absorbing member blocks transmission of light to prevent components arranged below the light absorbing member, for example, a display circuit board, etc. from being viewed from an upper portion of the display panel 112. The light absorbing member may include a light absorbing material such as a black pigment or a black dye.

The buffer member may be arranged below the light absorbing member (e.g., in a direction opposite to the third direction D3). The buffer member absorbs an external impact to prevent the display panel 112 from being damaged. The buffer member may include a single layer or a plurality of layers. For example, in an embodiment the buffer member may include a polymer resin such as polyurethane, polycarbonate, polypropylene and polyethylene, or may include a material having elasticity such as a rubber, a urethane-based material, or a sponge formed by foaming an acrylic-based material.

The heat dissipation member may be arranged below the buffer member (e.g., in a direction opposite to the third direction D3). In an embodiment, the heat dissipation member may include a first heat dissipation layer including graphite or carbon nanotubes and a second heat dissipation layer including a metal thin film such as copper, nickel, ferrite or silver, which may shield electromagnetic waves and have excellent thermal conductivity.

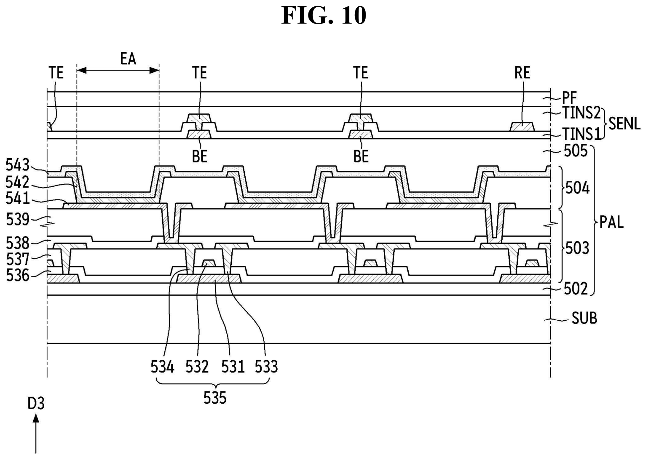

FIG. 10 is a schematic cross-sectional view illustrating a display panel of FIG. 9.

Referring further to FIG. 10, in an embodiment the display unit PAL may include a buffer film 502, a thin film transistor layer 503, a light emitting element layer 504 and an encapsulation layer 505.

The buffer film 502 may be formed on the substrate SUB (e.g., disposed directly thereon in the third direction D3). The buffer film 502 may be formed on the substrate SUB to protect thin film transistors 535 and light emitting elements from moisture permeated through the substrate SUB that is vulnerable to moisture permeation. The buffer film 502 may include a plurality of inorganic films that are alternately stacked (e.g., in the third direction D3). For example, in an embodiment the buffer film 502 may include a multi-film in which one or more inorganic films of a silicon oxide film (SiOx), a silicon nitride film (SiNx) and SiON are alternately stacked. However, embodiments of the present disclosure are not necessarily limited thereto. For example, in some embodiments the buffer film 502 may be omitted.

The thin film transistor layer 503 is formed on the buffer film 502 (e.g., disposed directly thereon in the third direction D3). In an embodiment, the thin film transistor layer 503 includes the thin film transistors 535, a gate insulating film 536, an interlayer insulating film 537, a passivation film 538 and an organic film 539.

Each of the thin film transistors 535 includes an active layer 531, a gate electrode 532, a source electrode 533 and a drain electrode 534. Although FIG. 10 illustrates that the thin film transistors 535 are formed in a top gate mode in which the gate electrode 532 is positioned above the active layer 531 (e.g., in the third direction D3), it should be noted that the thin film transistors 535 are not necessarily limited thereto. For example, in some embodiments the thin film transistors 535 may be formed in a bottom gate mode in which the gate electrode 532 is positioned below the active layer 531 (e.g., in a direction opposite to the third direction D3) or a double gate mode in which the gate electrode 532 is positioned above and below the active layer 531.

The active layer 531 is formed on the buffer film 502. In an embodiment, the active layer 531 may be made of a silicon-based semiconductor material or an oxide-based semiconductor material. For example, in an embodiment the active layer 531 may be made of poly silicon, amorphous silicon or an oxide semiconductor. A light blocking layer for blocking external light incident on the active layer 531 may be formed between the buffer film 502 and the active layer 531.

The gate insulating film 536 may be formed on (e.g., disposed directly thereon) the active layer 531. In an embodiment, the gate insulating film 536 may include an inorganic film, for example, a silicon oxide film (SiOx), a silicon nitride film (SiNx) or their multi-film.

The gate electrode 532 may be formed on the gate insulating film 536 (e.g., disposed directly thereon in the third direction D3). In an embodiment, the gate electrode 532 and a gate line may include a single layer or multi-layer made of any one of molybdenum (Mo), aluminum (Al), chromium (Cr), gold (Au), titanium (Ti), nickel (Ni), neodymium (Nd) and copper (Cu), or their alloy.

The interlayer insulating film 537 may be formed on (e.g., disposed directly thereon) the gate electrode 532 and the gate line. In an embodiment,, the interlayer insulating film 537 may include an inorganic film, for example, a silicon oxide film (SiOx), a silicon nitride film (SiNx) or their multi-film.

The source electrode 533 and the drain electrode 534 may be formed on the interlayer insulating film 537 (e.g., disposed directly thereon in the third direction D3). In an embodiment, each of the source electrode 533 and the drain electrode 534 may be connected to the active layer 531 through a contact hole passing through the gate insulating film 536 and the interlayer insulating film 537. In an embodiment, the source electrode 533 and the drain electrode 534 may include a single layer or multi-layer made of any one of molybdenum (Mo), aluminum (Al), chromium (Cr), gold (Au), titanium (Ti), nickel (Ni), neodymium (Nd) and copper (Cu), or their alloy.

The passivation film 538 for insulating the thin film transistor 535 may be formed on (e.g., disposed directly thereon) the source electrode 533 and the drain electrode 534. In an embodiment, the passivation film 538 may include an inorganic film, for example, a silicon oxide film (SiOx), a silicon nitride film (SiNx) or their multi-film.

The organic film 539 for planarizing a step difference due to the thin film transistor 535 may be formed on the passivation film 538. In an embodiment, the organic film 539 may include an organic film such as an acrylic resin, an epoxy resin, a phenolic resin, a polyamide resin or a polyimide resin.

The light emitting element layer 504 is formed on the thin film transistor layer 503 (e.g., disposed directly thereon in the third direction D3). The light emitting element layer 504 includes light emitting elements and a bank.

The light emitting elements and the bank are formed on the organic film 539. The light emitting element is illustrated as an organic light emitting element that includes an anode electrode 541, light emitting layers 542 and a cathode electrode 543. However, embodiments of the present disclosure are not necessarily limited thereto.

The anode electrode 541 may be formed on the organic film 539 (e.g. disposed directly thereon in the third direction D3). In an embodiment, the anode electrode 541 may be connected to the source electrode 533 of the thin film transistor 535 through a contact hole passing through the passivation film 538 and the organic film 539.

The bank may be formed to cover an edge of the anode electrode 541 on the organic film 539 and exposes a portion of the anode electrode 541 (e.g., a central portion) to partition light emission areas EA of pixels. For example, the bank serves to define the light emission areas EA of the pixels. Each of the pixels represents an area in which the anode electrode 541, the light emitting layer 542 and the cathode electrode 543 are sequentially stacked (e.g., in the third direction D3) to combine holes from the anode electrode 541 with electrons from the cathode electrode 543 in the light emitting layer 542, thereby emitting light.

The light emitting layers 542 are formed on the anode electrode 541 and the bank. The light emitting layer 542 may be an organic light emitting layer. In an embodiment, the light emitting layer 542 may emit one of red light, green light and blue light. Alternatively, the light emitting layer 542 may be a white light emitting layer for emitting white light, and in this case, the light emitting layer 542 may have a structure in which a red light emitting layer, a green light emitting layer and a blue light emitting layer are stacked (e.g., in the third direction D3), and may be a common layer commonly formed in the pixels. In this case, the display panel 112 may further include a separate color filter for displaying red, green and blue.

In an embodiment, the light emitting layer 542 may include a hole transporting layer, a light emitting layer and an electron transporting layer. In addition, the light emitting layer 542 may be formed in a tandem structure of two or more stacks, and in this case, a charge generating layer may be formed between the stacks.

The cathode electrode 543 is formed on the light emitting layer 542 (e.g., in the third direction D3). The cathode electrode 543 may be formed to cover the light emitting layer 542. In an embodiment, the cathode electrode 543 may be a common layer commonly formed in the pixels.

In an embodiment in which the light emitting element layer 504 is formed in a top emission mode in which light is emitted in an upward direction, the anode electrode 541 may be made of a metal material having high reflectance, such as a stacked structure (Ti/Al/Ti) of aluminum (Al) and titanium (Ti), a stacked structure (ITO/Al/ITO) of aluminum (Al) and indium tin oxide (ITO), APC alloy and a stacked structure (ITO/APC/ITO) of APC alloy and ITO. The APC alloy is an alloy of silver (Ag), palladium (Pd) and copper (Cu). The cathode electrode 543 may be made of a transparent conductive material TCO such as ITO and IZO, which may transmit light, or a semi-transmissive conductive material such as magnesium (Mg), silver (Ag) or an alloy of magnesium (Mg) and silver (Ag). When the cathode electrode 543 is made of a semi-transmissive conductive material, light emission efficiency may be increased by a micro cavity.

When the light emitting element layer 504 is formed in a bottom emission mode in which light is emitted in a downward direction, the anode electrode 541 may be made of a transparent conductive material TCO such as ITO and IZO, which may transmit light, or a semi-transmissive conductive material such as magnesium (Mg), silver (Ag) or an alloy of magnesium (Mg) and silver (Ag). The cathode electrode 543 may be made of a metal material having high reflectance, such as a stacked structure (Ti/Al/Ti) of aluminum (Al) and titanium (Ti), a stacked structure (ITO/Al/ITO) of aluminum (Al) and ITO, APC alloy, and a stacked structure (ITO/APC/ITO) of APC alloy and ITO. When the anode electrode 541 is made of a semi-transmissive conductive material, light emission efficiency may be increased by a micro cavity.

The encapsulation layer 505 is formed on the light emitting element layer 504 (e.g., disposed directly thereon in the third direction D3). The encapsulation layer 505 serves to prevent permeation of oxygen or moisture into the light emitting layer 542 and the cathode electrode 543. To this end, the encapsulation layer 505 may include at least one inorganic film. In an embodiment, the inorganic film may include silicon nitride, aluminum nitride, zirconium nitride, titanium nitride, hafnium nitride, tantalum nitride, silicon oxide, aluminum oxide or titanium oxide. Also, the encapsulation layer 505 may further include at least one organic film. The organic film may be formed to have a sufficient thickness to prevent particles from being permeated into the light emitting layer 542 and the cathode electrode 543 by passing through the encapsulation layer 505. In an embodiment, the organic film may include any one of epoxy, acrylate and urethane acrylate.

The sensor unit SENL may be formed on the encapsulation layer 505 (e.g., disposed directly thereon in the third direction D3). When the sensor unit SENL is formed directly on the encapsulation layer 505, there is an advantage in that a thickness of the display module 110 may be reduced as compared with the case that a separate touch panel is attached onto the encapsulation layer 505.

The sensor unit SENL may include sensor electrodes for sensing a user's touch in a capacitance manner and touch lines connecting pads with the sensor electrodes. For example, the sensor unit SENL may sense a user's touch in a self-capacitance manner or a mutual capacitance manner. The description in FIG. 10 will be based on that the sensor unit SENL is formed in a mutual capacitance manner of a two-layer that includes the driving electrodes TE, the sensing electrodes RE, and the connection portions BE connecting the driving electrodes TE for economy of explanation.

The connection portions BE may be formed on the encapsulation layer 505. In an embodiment, the connection portions BE may include a stacked structure (Ti/Al/Ti) of aluminum and titanium, a stacked structure (ITO/Al/ITO) of aluminum (Al) and ITO, APC alloy, and a stacked structure (ITO/APC/ITO) of APC alloy and ITO, but are not necessarily limited thereto. For example, in some embodiments the connection portions BE may include a single layer of molybdenum (Mo), titanium (Ti), copper (Cu), aluminum (Al) or ITO.

A first sensing insulating film TINS1 is formed on (e.g., disposed directly thereon) the connection portions BE. In an embodiment, the first sensing insulating film TINS1 may include an inorganic film, for example, a silicon nitride layer, a silicon oxynitride layer, a silicon oxide layer, a titanium oxide layer or an aluminum oxide layer.

The driving electrodes TE and the sensing electrodes RE may be formed on the first sensing insulating film TINS1 (e.g., disposed directly thereon in the third direction D3). In an embodiment, the driving electrodes TE and the sensing electrodes RE may include a stacked structure (Ti/Al/Ti) of aluminum (Al) and titanium, a stacked structure (ITO/Al/ITO) of aluminum (Al) and ITO, APC alloy, and a stacked structure (ITO/APC/ITO) of APC alloy and ITO, but are not necessarily limited thereto. For example, in some embodiments the driving electrodes TE and the sensing electrodes RE may include a single layer of molybdenum (Mo), titanium (Ti), copper (Cu), aluminum (Al) or ITO.

Contact holes exposing the connection portions BE by passing through the first sensing insulating film TINS1 may be formed in the first sensing insulating film TINS1. In an embodiment, the driving electrodes TE may be connected to the connection portions BE through the contact holes.

A second sensing insulating film TINS2 is formed on (e.g., disposed directly thereon) the driving electrodes TE and the sensing electrodes RE. The second sensing insulating film TINS2 may serve to planarize a step difference caused by the driving electrodes TE, the sensing electrodes RE and the connection portions BE. In an embodiment, the second sensing insulating film TINS2 may include an organic film such as an acrylic resin, an epoxy resin, a phenolic resin, a polyamide resin and a polyimide resin.

The connection portions BE connecting the driving electrodes TE adjacent to each other may be arranged on the encapsulation layer 505, and the driving electrodes TE and the sensing electrodes RE may be arranged on the first sensing insulating film TINS1. Therefore, the driving electrodes TE and the sensing electrodes RE may be electrically separated from each other at their intersections, the sensing electrodes RE may be electrically connected to each other in one direction, and the driving electrodes TE may be electrically connected to each other in the other direction.

The polarizing film PF may be arranged on (e.g., disposed directly thereon in the third direction D3) the second sensing insulating film TINS2 to prevent deterioration in image visibility of the display panel 112 due to reflection of external light.

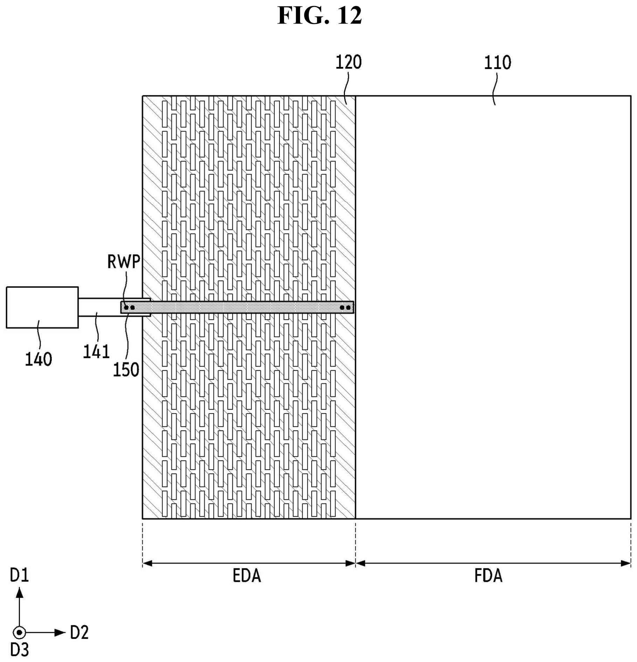

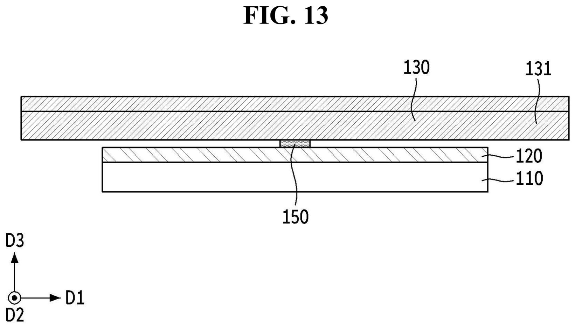

FIG. 11 is a plan view illustrating an unfolded state of a display device according to an embodiment of the present disclosure. FIG. 12 is a plan view illustrating a state that a plurality of multi-bars are removed from FIG. 11. FIG. 13 is a side view of FIG. 11 viewed in a second direction.

Referring to FIGS. 11 to 13, the module support member 120 may be arranged on the display module 110 (e.g., disposed directly thereon in the third direction D3). For example, the module support member 120 may be arranged on the expanded display area EDA of the display module 110.

In an embodiment, the module support member 120 may include a metal material, and may protect the display module 110 from an external impact. Also, particles generated from the outside of the display module 110 may be prevented from being permeated into the display module 110.

As shown in FIG. 12, in an embodiment a plurality of openings arranged in a first direction D1 and the second direction D2 may be formed in the module support member 120. In an embodiment, the plurality of openings may be arranged to have a lattice shape. As the module support member 120 includes a plurality of openings, flexibility of the module support member 120 may be increased, and stress generated when the display module 110 is folded, bent and slid may be reduced. The arrangement of these openings, for instance in a lattice shape, reduces the overall weight of the sliding assembly while maintaining the necessary structural rigidity. This reduction in mass minimizes the inertia of the moving parts, allowing for a more efficient and responsive sliding mechanism. Furthermore, the openings allow the support member 120 to flex controllably in concert with the display module 110, which helps to distribute stress evenly and prevent localized concentrations of force that could otherwise damage the delicate display panel.

The plurality of multi-bars 130 may be arranged on the module support member 120. In an embodiment, each of the plurality of multi-bars 130 may extend longitudinally in the first direction D1 on the module support member 120. For example, a first side (e.g., a lower side of FIG. 11) of the multi-bars 130 in the first direction D1 may be in direct contact with a first side (e.g., the lower side of FIG. 11) of the module support member 120 in the first direction D1, and the opposite second side (e.g., an upper side of FIG. 11) of the multi-bars 130 in the first direction D1 may be in direct contact with the opposite second side (the upper side of FIG. 11) of the module support member 120 in the first direction D1. The plurality of multi-bars 130 may be arranged to be spaced apart from each other in the second direction D2. In an embodiment, the second direction D2 may be perpendicular to the first direction D1 and each of the first to third directions D1 to D3 may be perpendicular to each other. However, embodiments of the present disclosure are not necessarily limited thereto and the first to third directions D1, D2, D3 may cross each other at various different angles.

In an embodiment, the plurality of multi-bars 130 may be bonded to the module support member 120 at a plurality of bonding points BWP. The plurality of bonding points BWP may be arranged to be spaced apart from each other on each multi-bar 130 along a longitudinal direction of the multi-bar 130. For example, in some embodiments, the plurality of bonding points BWP may be spaced apart from each other in the first direction D1 on each multi-bar 130. In an embodiment, the plurality of multi-bars 130 and the module support member 120 may be bonded to each other at the plurality of bonding points BWP by laser welding. While laser welding is described as one embodiment for creating the bonding points BWP, it will be understood that other suitable fixing methods could be employed to achieve a secure connection between the multi-bars 130 and the module support member 120. For example, alternative methods may include, but are not limited to, other types of welding, bonding with a high-strength structural adhesive, or using mechanical fasteners, depending on the specific materials and manufacturing requirements.

The insertion portion 131 may be formed on respective sides (e.g., ends) of the plurality of multi-bars 130 in the first direction D1. In an embodiment, the insertion portion 131 may extend longitudinally in the first direction D1 on respective sides (e.g., upper and lower ends) of the plurality of multi-bars 130 in the first direction D1. In an embodiment, the insertion portion 131 may be inserted into the guide rail 210 of the case 200 so that the plurality of multi-bars 130 may move along the guide rail 210. In this way, since the plurality of multi-bars 130 move along the guide rail 210, the display module 110 may be slidably moved. The guide rail 210 provides a stable and precise path for the multi-bars 130, which ensures a smooth, repeatable, and jam-free sliding motion. This mechanical guidance improves the operational reliability and longevity of the electronic device, as it prevents misalignment of the display module 110 during extension and retraction. The plurality of multi-bars 130, arranged to be spaced apart from each other, collectively form a slat-like support structure. This configuration enables a large, continuous, and stable support surface for the display module 110 when extended, while allowing the structure to be compactly stored in a smaller volume when the device is retracted.

The driving module 140 may be connected to (e.g., directly connected thereto) the driving shaft 141 to provide a driving force for sliding movement of the plurality of multi-bars 130. In an embodiment, the driving module 140 may be connected to (e.g., directly connected thereto) the driving shaft 141 outside the display module 110, and may be supported by the case 200.

The driving shaft 141 may be connected to the driving module 140 and the plurality of multi-bars 130. For example, in an embodiment a first side (e.g., a left side of FIG. 11) of the driving shaft 141 in the second direction D2 may be connected to the driving module 140, and the opposite second side (e.g., a right side of FIG. 11) of the driving shaft 141 in the second direction D2 may be connected to the outermost multi-bar 130 among the plurality of multi-bars 130. In an embodiment, the multi-bar 130 connected to (e.g., directly connected thereto) the second side (e.g., the right side of FIG. 11) of the driving shaft 141 in the second direction D2 may be the multi-bar 130 arranged on the leftmost side of FIG. 11 (e.g., in the second direction D2). The driving shaft 141 may extend from outside of the display module 110 to the module support member 120, and may be connected to (e.g., directly connected thereto) the multi-bar 130 arranged on the outermost multi-bar among the plurality of multi-bars 130.

The driving shaft 141 may extend (e.g., in the second direction D2) from the outside of the display module 110 (e.g., in a plan view) towards a center portion of the expanded display area EDA in the first direction D1. In some embodiments, the driving shaft 141 may extend towards a middle portion of the display module 110 in the first direction D1 on the module support member 120.

The reinforcing member 150 may be arranged between the module support member 120 and the plurality of multi-bars 130 (e.g., in a thickness direction of the display module 110, such as the third direction D3). In an embodiment, the reinforcing member 150 may extend longitudinally along the second direction D2 from the center portion of the expanded display area EDA in the first direction D1. In an embodiment, a length of the reinforcing member 150 in the second direction D2 may be greater than a length of the expanded display area EDA and the module support member 120 in the second direction D2.

The reinforcing member 150 may be fixed to the driving shaft 141 and the module support member 120. For example, an end portion of the reinforcing member 150 on a first side (e.g., the left side of FIG. 11) in the second direction D2 may be fixed to the driving shaft 141, and an opposite second end portion of the reinforcing member 150 on the opposite second side (e.g., the right side of FIG. 11) in the second direction D2 may be fixed to the module support member 120 near a boundary line between the fixed display area FDA and the expanded display area EDA. The reinforcing member 150, the driving shaft 141, and the module support member 120 may be fixed to one another at a plurality of fixing points RWP. The plurality of fixing points RWP may be spaced apart from each other along the second direction D2. The end portion of the reinforcing member 150 on a first side (e.g., the left side of FIG. 11) in the second direction D2 may be fixed to the driving shaft 141 at the plurality of fixing points RWP, and the end portion of the reinforcing member 150 on the opposite second side (e.g., the right side of FIG. 11) in the second direction D2 may be fixed to the module support member 120 at the plurality of fixing points RWP. In an embodiment, the reinforcing member 150, the driving shaft 141 and the module support member 120 may be fixed at the plurality of fixing points RWP by welding, such a laser welding.

The reinforcing member 150 may be arranged on the same virtual line as the driving shaft 141. In a state that the reinforcing member 150 is arranged on the same virtual line as the driving shaft 141, the reinforcing member 150 may be pulled to respective sides in the second direction D2 and fixed to the driving shaft 141 and the module support member 120. In this way, as the reinforcing member 150 supports the display module 110 in a state that the respective sides of the reinforcing member 150 are pulled in the second direction D2, tension acts on the display module 110, so that a portion of the display module 110 may be prevented from protruding outward in a sliding process of the display module 110.

The reinforcing member 150 may be arranged between the plurality of bonding points BWP (e.g., in a plan view) where the module support member 120 is bonded to the plurality of bonding points BWP. In this way, since the reinforcing member 150 is arranged between the plurality of bonding points BWP (e.g., in a plan view), in the sliding process of the display module 110, movement of the reinforcing member 150 in the first direction D1 may be limited to between adjacent bonding points (e.g., in the first direction D1) of the plurality of bonding points BWP, so that the reinforcing member 150 may be prevented from being excessively deviated from its original position. This positioning of the reinforcing member 150 between the bonding points BWP laterally constrains the reinforcing member. Such constraint prevents the member from shifting sideways (in the first direction D1) during operation, ensuring that the tensile force is consistently applied along the intended sliding axis (the second direction D2). This maximizes the effectiveness of the reinforcing member in preventing the display module from protruding.

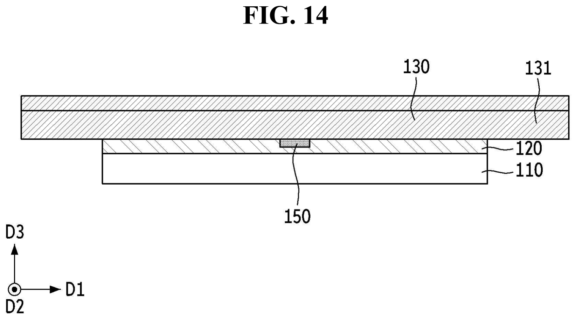

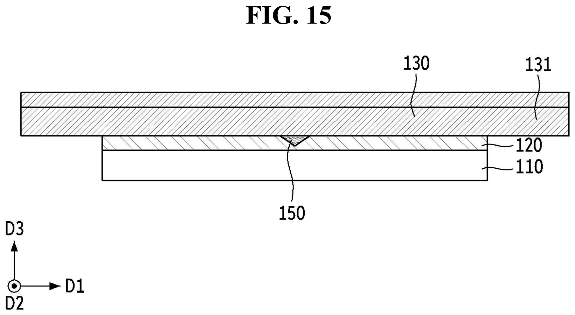

FIGS. 14 and 15 are side views illustrating another example of FIG. 13.

Referring to FIGS. 14 and 15, in an embodiment an insertion groove for receiving the reinforcing member 150 that is inserted therein may be formed in the module support member 120. The insertion groove may be formed to be recessed towards the display module 110 from a first surface (e.g., an upper surface in the third direction D3) of the module support member 120 which is in direct contact with the plurality of multi-bars 130. The insertion groove may provide a space for inserting (e.g., disposing therein) at least a portion of the reinforcing member 150 into the module support member 120. In this way, when the reinforcing member 150 is inserted into the insertion groove, movement of the reinforcing member 150 in the first direction D1 may be limited to within the insertion groove, so that the reinforcing member 150 may be prevented from being deviated from its original position. In an embodiment, the reinforcing member 150 may be formed in a shape corresponding to the insertion groove so that the reinforcing member 150 may be smoothly inserted into the insertion groove. By seating the reinforcing member 150 within an insertion groove, it becomes mechanically interlocked with the module support member 120. This provides a more robust constraint against movement in both the first direction D1 and the third direction D3 compared to a simple surface mounting. This ensures the reinforcing member remains in its optimal position to apply tension.

In an embodiment, a cross-sectional area of the insertion groove in a thickness direction of the module support member 120 may be gradually reduced (e.g., gradually decreases) towards the display module 110. For example, as shown in FIG. 15, the insertion groove may be formed to have an inverted triangle shape (e.g., in a cross-sectional view). In the present embodiment, the cross-sectional shape of the insertion groove is described as having an inverted triangle shape, but is not necessarily limited thereto. The cross-sectional shape of the insertion groove may include various shapes such as a square shape, a polygonal shape, a circular shape, etc. This tapered or inverted triangle shape of the insertion groove of mechanically limits the movement of the correspondingly shaped reinforcing member 150 in the thickness direction D3, thereby providing a more secure seating and preventing the reinforcing member 150 from lifting away from the module support member 120 during operation. This enhances the stability of the reinforcing mechanism.

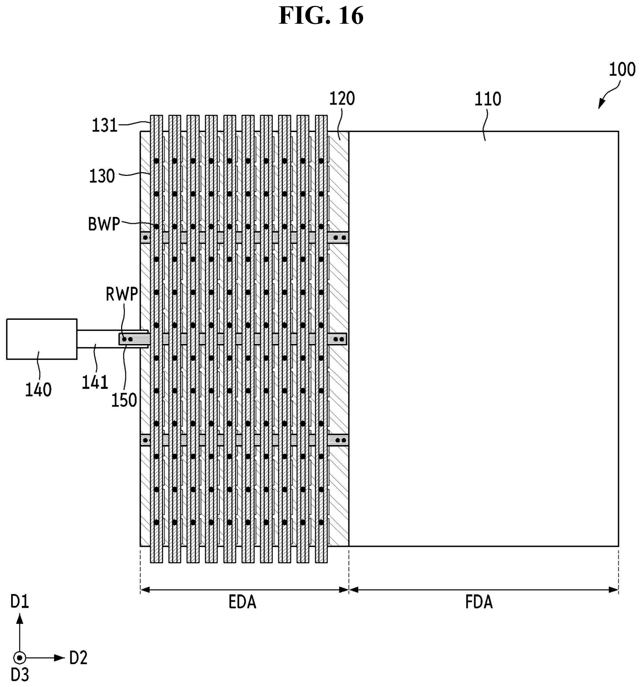

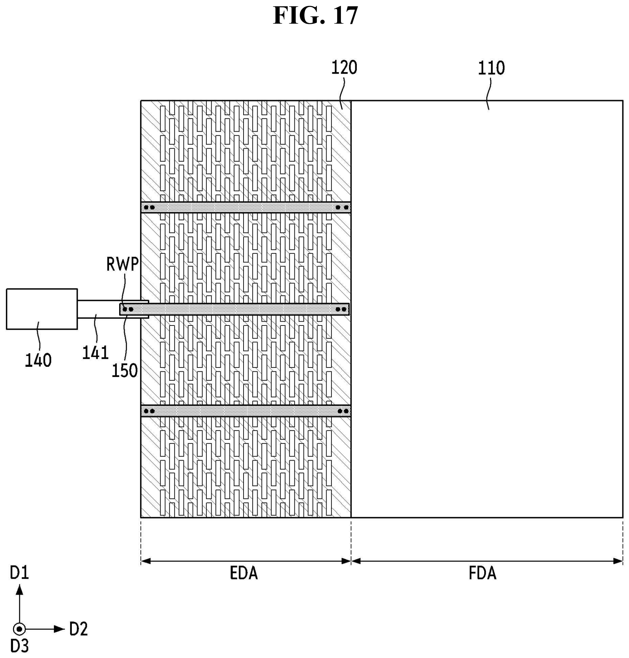

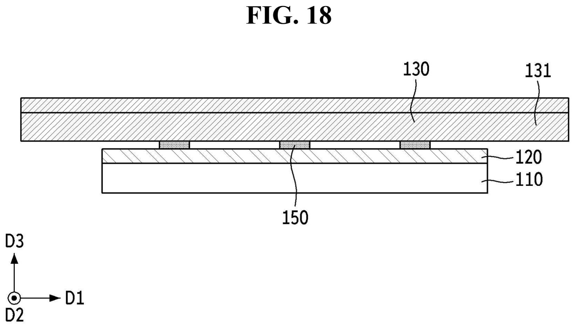

FIG. 16 is a plan view illustrating a state that a plurality of reinforcing members are arranged in FIG. 11. FIG. 17 is a plan view illustrating a state that a plurality of multi-bars are removed from FIG. 16. FIG. 18 is a side view of FIG. 16 viewed in a second direction.

Referring to FIGS. 16 to 18, the reinforcing member 150 may include a plurality of reinforcing members. The plurality of reinforcing members 150 may be arranged to be spaced apart from each other in the first direction D1. For example, in an embodiment the plurality of reinforcing members 150 may include a first reinforcing member 150, a second reinforcing member 150, and a third reinforcing member 150. However, the number of the plurality of reinforcing members 150 may vary and may be two or four or more in some embodiments. The first reinforcing member 150 may be a reinforcing member 150 fixed to the driving shaft 141, the second reinforcing member 150 may be a reinforcing member 150 arranged at a lower side of FIG. 16 (e.g., in the first direction D1), which is lower than the first reinforcing member 150, and the third reinforcing member 150 may be a reinforcing member 150 arranged at an upper side of FIG. 16 (e.g., in the first direction D1), which is higher than the first reinforcing member 150. The first reinforcing member 150, the second reinforcing member 150, and the third reinforcing member 150 may be arranged to be spaced apart from one another in the first direction D1, and may extend longitudinally in the second direction D2. In the present embodiment, the plurality of reinforcing members 150 are provided as three reinforcing members 150, but embodiments of the present disclosure are not necessarily limited thereto. The number of reinforcing members 150 may be increased or decreased, such as depending on the size of the display module 110. The plurality of reinforcing members 150 may be arranged between the module support member 120 and the plurality of multi-bars 130 (e.g., in the third direction D3).

The first reinforcing member 150 may be fixed to the driving shaft 141 and the module support member 120. For example, an end portion of a first side (e.g., a left side of FIG. 16) of the first reinforcing member 150 in the second direction D2 may be fixed to the driving shaft 141, and an end portion of the opposite second side (e.g., a right side of FIG. 16) of the first reinforcing member 150 in the second direction D2 may be fixed to the module support member 120 near the boundary line between the fixed display area FDA and the expanded display area EDA. The first reinforcing member 150, the driving shaft 141, and the module support member 120 may be fixed to one another at a plurality of fixing points RWP. The plurality of fixing points RWP may be spaced apart from each other in the second direction D2. An end portion of a first side (e.g., the left side of FIG. 16) of the first reinforcing member 150 in the second direction D2 may be fixed to the driving shaft 141 at the plurality of fixing points RWP, and an end portion of the opposite second side (e.g., the right side of FIG. 16) of the first reinforcing member 150 in the second direction D2 may be fixed to the module support member 120 at the plurality of fixing points RWP. In an embodiment, the first reinforcing member 150, the driving shaft 141, and the module support member 120 may be fixed at the plurality of fixing points RWP by laser welding.

The first reinforcing member 150 may be arranged on the same virtual line as the driving shaft 141. In a state that the first reinforcing member 150 is arranged on the same virtual line as the driving shaft 141, the first reinforcing member 150 may be pulled to respective sides in the second direction D2 and fixed to the driving shaft 141 and the module support member 120.

The second reinforcing member 150 may be spaced apart from the first reinforcing member 150 towards a first side (e.g., the lower side of FIG. 16) in the first direction D1. Respective sides of the second reinforcing member 150 in the second direction D2 may be fixed to the module support member 120. For example, in an embodiment an end portion of a first side (e.g., the left side of FIG. 16) of the second reinforcing member 150 in the second direction D2 may be fixed to the module support member 120 near an edge (e.g., a left edge in the second direction D2) of the expanded display area EDA. An end portion of the opposite second side (e.g., the right side of FIG. 16) end of the second reinforcing member 150 in the second direction D2 may be fixed to the module support member 120 near the boundary line between the fixed display area FDA and the expanded display area EDA.

The second reinforcing member 150 and the module support member 120 may be fixed to each other at the plurality of fixing points RWP. The plurality of fixing points RWP may be spaced apart from each other along the second direction D2. An end portion of a first side (e.g., the left side of FIG. 16) of the second reinforcing member 150 in the second direction D2 may be fixed to the module support member 120 at the plurality of fixing points RWP, and an end portion of the opposite second side (e.g., the right side of FIG. 16) of the second reinforcing member 150 in the second direction D2 may be fixed to the module support member 120 at the plurality of fixing points RWP. In an embodiment, the second reinforcing member 150 and the module support member 120 may be fixed at the plurality of fixing points RWP by laser welding.

The second reinforcing member 150 may be arranged in parallel with the first reinforcing member 150. In a state that the second reinforcing member 150 is arranged in parallel with the first reinforcing member 150, the second reinforcing member 150 may be pulled to respective sides in the second direction D2 and fixed to the module support member 120. In general, the reinforcing member or members 150 may be formed from any suitable material possessing high tensile strength and appropriate flexibility. While a metallic material may be used, other non-limiting examples include carbon fiber composites, reinforced polymers, or other advanced materials capable of sustaining tension over many operational cycles without significant plastic deformation or fatigue.

The third reinforcing member 150 may be spaced apart from the first reinforcing member 150 towards the opposite second side (e.g., the upper side of FIG. 16) in the first direction D1. Respective sides of the third reinforcing member 150 in the second direction D2 may be fixed to the module support member 120. For example, an end portion of a first side (e.g., the left side of FIG. 16) of the third reinforcing member 150 in the second direction D2 may be fixed to the module support member 120 near the edge (e.g., a left edge in the second direction D2) of the expanded display area EDA. An end portion of the opposite second side (e.g., the right side of FIG. 16) end of the third reinforcing member 150 in the second direction D2 may be fixed to the module support member 120 near the boundary line between the fixed display area FDA and the expanded display area EDA.

The third reinforcing member 150 and the module support member 120 may be fixed to each other at the plurality of fixing points RWP. The plurality of fixing points RWP may be spaced apart from each other in the second direction D2. An end portion of a first side (e.g., the left side of FIG. 16) of the third reinforcing member 150 in the second direction D2 may be fixed to the module support member 120 at the plurality of fixing points RWP, and an end portion of the opposite second side (e.g., the right side of FIG. 16) of the third reinforcing member 150 in the second direction D2 may be fixed to the module support member 120 at the plurality of fixing points RWP. In an embodiment, the third reinforcing member 150 and the module support member 120 may be fixed at the plurality of fixing points RWP by laser welding.

In an embodiment, the plurality of reinforcing members 150 may include a first reinforcing member having a first side (e.g., a left side in the second direction D2) that is fixed to the driving shaft 141 and an opposite second side (e.g., a right side in the second direction D2) that is fixed to the module support member 120. First and second end portions of the other reinforcing members of the plurality of reinforcing members 150 not including the first reinforcing member may each be fixed to the module support member 120.

The third reinforcing member 150 may be arranged in parallel with the first reinforcing member 150. In a state that the third reinforcing member 150 is arranged in parallel with the first reinforcing member 150, the third reinforcing member 150 may be pulled to respective sides in the second direction D2 and fixed to the module support member 120.

In this way, as the plurality of reinforcing members 150 support the display module 110 in a state that their respective sides are pulled in the second direction, tension acts on the display module 110, so that a portion of the display module may be prevented from protruding outward during the sliding process of the display module 110. The use of a plurality of reinforcing members 150 spaced apart in the first direction D1 distributes the reinforcing tensile force more evenly across the entire width of the expanded display area EDA. This is particularly effective for wider displays, as it counteracts the tendency to protrude not only at the center line of the driving shaft 141 but also towards the lateral edges of the display. This results in a more uniformly flat and visually consistent display surface during the sliding motion. While the central reinforcing member counteracts the primary driving forces, the additional reinforcing members, which may be anchored directly to the module support member 120, create a comprehensive tension field that provides robust reinforcement against buckling across the full width of the display.

The plurality of reinforcing members 150 may be arranged between the plurality of bonding points BWP at which the module support member 120 is bonded to the plurality of multi-bars 130. In this way, since the plurality of reinforcing members 150 are arranged between the plurality of bonding points BWP, in the sliding process of the display module 110, movement of the plurality of reinforcing members 150 in the first direction D1 may be limited to between the plurality of bonding points BWP, so that the plurality of reinforcing members 150 may be prevented from being excessively deviated from their original positions.

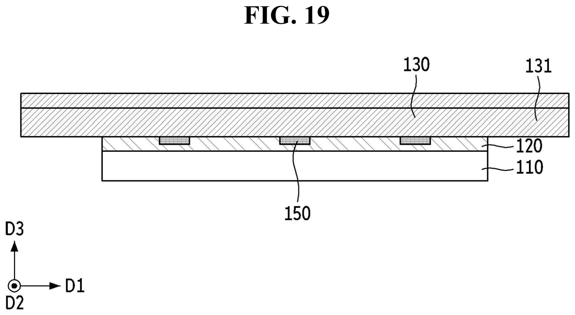

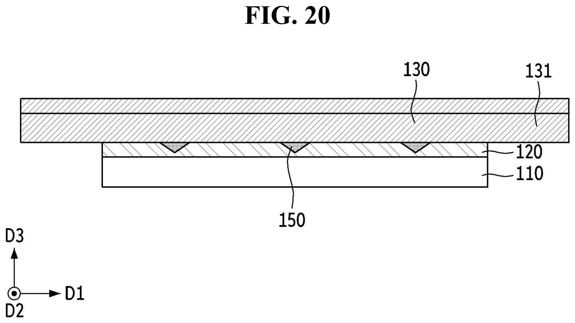

FIGS. 19 and 20 are side views illustrating another example of FIG. 18.

Referring to FIGS. 19 and 20, a plurality of insertion grooves for receiving the plurality of reinforcing members 150 may be formed in the module support member 120. The plurality of insertion grooves may be arranged to be spaced apart from each other in the first direction D1. The plurality of insertion grooves may be formed to be recessed towards the display module 110 from a first surface (e.g., an upper surface) of the module support member 120 which is in direct contact with the plurality of multi-bars 130. The plurality of insertion grooves may provide a space for receiving at least a portion of the plurality of reinforcing members 150 inserted into the module support member 120. In this way, when the plurality of reinforcing members 150 are inserted into the plurality of insertion grooves, movement of the plurality of reinforcing members 150 in the first direction D1 may be limited, so that the plurality of reinforcing members 150 may be prevented from being deviated from their original positions. In an embodiment, the plurality of reinforcing members 150 may be formed in a shape corresponding to the plurality of insertion grooves so that the plurality of reinforcing members 150 may be smoothly inserted into the plurality of insertion grooves.

In an embodiment, a cross-sectional area of the insertion grooves in a thickness direction of the module support member 120 may be gradually reduced towards the display module 110. For example, as shown in FIG. 20, the plurality of insertion grooves may be formed to have an inverted triangle shape (e.g., in a cross-sectional view). In the present embodiment, the cross-sectional shape of the plurality of insertion grooves is described as having an inverted triangle shape, but is not necessarily limited thereto. The cross-sectional shape of the plurality of insertion grooves may include various shapes such as a square shape, a polygonal shape, a circular shape, etc. In some embodiments, the respective shapes of the plurality of reinforcing members 150 and the corresponding insertion grooves may be the same as or different from each other. For example, in an embodiment some of the plurality of reinforcing members 150 may have an inverted triangle shape received in a corresponding insertion groove while other reinforcing members 150 have a rectangular shape received in a corresponding insertion groove, etc.

It should be understood, however, that the aspects and features of embodiments of the present disclosure are not restricted to the ones set forth herein and includes all equivalents thereof, etc.

## Claims

1. A display device (100) comprising:
a display module (110);
a module support member (120) arranged on the display module (110);
a plurality of multi-bars (130) arranged on the module support member (120); and
a reinforcing member (150) arranged between the module support member (120) and the plurality of multi-bars (130) in a thickness direction (D3) of the display module (110).

2. The display device (100) of claim 1, further comprising:
a driving shaft (141) connected to the plurality of multi-bars (130); and
a driving module (140) connected to the driving shaft (141).

3. The display device (100) of any one of claims 1 or 2, wherein:
the display module (110) includes a fixed display area (FDA) and an expanded display area (EDA); and
the module support member (120) is arranged on the expanded display area (EDA).

4. The display device (100) of claim 3, wherein:
the expanded display area (EDA) extends in a first direction (D2) from the fixed display area (FDA);
the plurality of multi-bars (130) is arranged to be spaced apart from each other in the first direction (D2); and
the driving shaft (141) extends from an outside of the display module (110) to the expanded display area (EDA), and is connected to an outermost multi-bar among the plurality of multi-bars (130).

5. The display device (100) of claim 4, wherein the reinforcing member (150) extends along the first direction (D2) on a center portion of the expanded display area (EDA), wherein the center portion is defined in a second direction (D1) perpendicular to the first direction (D2).

6. The display device (100) of any one of claims 4 or 5, wherein:
an end portion of a first side of the reinforcing member (150) is fixed to the driving shaft (141), and
an end portion of an opposite second side of the reinforcing member (150) is fixed to the module support member (120) at or adjacent to a boundary line between the fixed display area (FDA) and the expanded display area (EDA).

7. The display device (100) of any one of claims 4 to 6, wherein:
the plurality of multi-bars (130) extend in a second direction (D1) perpendicular to the first direction (D2);
each of the plurality of multi-bars (130) and the module support member (120) are bonded to each other at a plurality of bonding points (BWP); and
the plurality of bonding points (BWP) are arranged to be spaced apart from each other in the second direction (D1) along each of the plurality of multi-bars (130), and
the reinforcing member (150) is arranged between the plurality of bonding points (BWP) in a plan view.

8. The display device (100) of any one of the preceding claims, wherein:
the module support member (120) includes an insertion groove for receiving the reinforcing member (150); and
at least a portion of the reinforcing member (150) is disposed in the insertion groove of the module support member (120).

9. The display device (100) of claim 8, wherein:
the insertion groove has a cross-sectional area in a thickness direction (D3) of the module support member (120) that gradually decreases towards the display module (110); and
the reinforcing member (150) has a shape corresponding to the insertion groove.

10. The display device (100) of any of claims 4 to 9, wherein:
the reinforcing member (150) includes a plurality of reinforcing members (150); and
the plurality of reinforcing members (150) is arranged to be spaced apart from each other in a second direction (D1) perpendicular to the first direction (D2).

11. The display device (100) of claim 10, wherein an end portion of a first side of a first reinforcing member (150) of the plurality of reinforcing members (150) is fixed to the driving shaft (141), an end portion of an opposite second side of the first reinforcing member (150) of the plurality of reinforcing members (150) is fixed to the module support member (120); and
end portions of respective first and second sides of other reinforcing members (150) not including the first reinforcing member (150) are fixed to the module support member (120).

12. The display device (100) of claim 11, wherein:
the driving shaft (141) extends in the first direction (D2) on a center portion of the expanded display area (EDA), wherein the center portion is defined in the second direction (D1);
the end portion of the second side of the first reinforcing member (150) is fixed to the module support member (120) at or adjacent to a boundary line between the fixed display area (FDA) and the expanded display area (EDA), and
the first reinforcing member (150) is arranged on a same virtual line as the driving shaft (141).

13. The display device (100) of any one of claims 11 or 12, wherein:
the end portions of the first side of the other reinforcing members (150) not including the first reinforcing member (150) are fixed to the module support member (120) at or adjacent to an edge of the expanded display area (EDA); and
the end portions of the second sides of the other reinforcing members (150) not including the first reinforcing member (150) are fixed to the module support member (120) at or adjacent to a boundary line between the fixed display area (FDA) and the expanded display area (EDA).

14. The display device (100) of any one of claims 10 to 13, wherein:
the module support member (120) includes a plurality of insertion grooves receiving the plurality of reinforcing members (150), respectively;
at least a portion of the plurality of reinforcing members (150) is disposed in the plurality of insertion grooves of the module support member (120),
the plurality of insertion grooves has a cross-sectional area in a thickness direction (D3) of the module support member (120) that gradually decreases towards the display module (110); and
the plurality of reinforcing members (150) has a shape corresponding to the plurality of insertion grooves, respectively.

15. An electronic device (10) comprising:
the display device (100) according to any one of the preceding claims; and
a case (200) supporting the display module (110).
